# EUROPEAN PATENT APPLICATION

(11) **EP 4 704 454 A1**
(43) Date of publication of application: **04.03.2026**
(21) Application number: 24795982.8
(22) Date of filing: 22.04.2024
(51) Int. Cl.: H04W 8/24

(54) **METHOD AND APPARATUS FOR REPORTING NUMBER OF CPUS, METHOD AND APPARATUS FOR RECEIVING NUMBER OF CPUS, TERMINAL AND NETWORK SIDE DEVICE**

(30) Priority: 27.04.2023 CN 202310479027
(71) Applicant: Vivo Mobile Communication Co., Ltd., Dongguan, Guangdong 523863 (CN)
(72) Inventor: REN, Qianyao, Dongguan, Guangdong 523863 (CN); WU, Hao, Dongguan, Guangdong 523863 (CN)
(74) Representative: dompatent
(86) International application number: PCT/CN2024/089009
(87) International publication number: WO 2024/222601

(57) **Abstract**

The present application relates to the technical field of communications, and discloses a method and apparatus for reporting the number of CPUs, a method and apparatus for receiving the number of CPUs, a terminal and a network side device. The method for reporting the number of CPUs in embodiments of the present application comprises: a terminal reports the number of CPUs occupied by a first CSI, wherein the first CSI is CSI processed on the basis of an AI unit.

## Description

### CROSS-REFERENCE TO RELATED APPLICATIONS

This application claims the priority of Chinese Patent Application No. 202310479027.2 filed on April, 27, 2023, which is incorporated herein by reference in its entirety.

### TECHNICAL FIELD

This application pertains to the field of communication technology, and specifically relates to a method and apparatus for reporting a quantity of CPUs, a method and apparatus for receiving a quantity of CPUs, a terminal, and a network side device.

### BACKGROUND

A channel state information (Channel State Information, CSI) processing unit (CSI processing unit, CPU) is a basic unit for a terminal to process CSI, and a CPU configuration requirement (requirement) corresponding to the CSI is usually in such a configuration that all CPUs process one piece of CSI together. This leads to poor flexibility in CSI processing.

### SUMMARY

Embodiments of this application provide a method and apparatus for reporting a quantity of CPUs, a method and apparatus for receiving a quantity of CPUs, a terminal, and a network side device, to solve a problem of poor flexibility in CSI processing in related technologies.

According to a first aspect, a method for reporting a quantity of CPUs is provided, and performed by a terminal, where the method includes:
reporting, by a terminal, a quantity of CPUs occupied by first CSI,
where the first CSI is CSI processed based on an artificial intelligence (Artificial Intelligence, AI) unit.

According to a second aspect, a method for receiving a quantity of CPUs is provided, and is performed by a network side device, where the method includes:
receiving, by a network side device, a quantity, which is reported by a terminal, of CPUs occupied by first CSI,
where the first CSI is CSI processed based on an AI unit.

According to a third aspect, an apparatus for reporting a quantity of CPUs is provided, including:
a reporting module, configured to report a quantity of CPUs occupied by first CSI,
where the first CSI is CSI processed based on an AI unit.

According to a fourth aspect, an apparatus for receiving a quantity of CPUs is provided, including:
a receiving module, configured to receive a quantity, which is reported by a terminal, of CPUs occupied by first CSI,
where the first CSI is CSI processed based on an AI unit.

According to a fifth aspect, a terminal is provided. The terminal includes a processor and a memory, where the memory stores a program or instructions runnable on the processor, and the program or instructions, when executed by the processor, implement the steps of the method according to the first aspect.

According to a sixth aspect, a terminal is provided, including a processor and a communication interface, where the communication interface is configured to report a quantity of CPUs occupied by first CSI; and the first CSI is CSI processed based on an AI unit.

According to a seventh aspect, a network side device is provided. The network side device includes a processor and a memory, where the memory stores a program or instructions runnable on the processor, and the program or instructions, when executed by the processor, implement the steps of the method according to the second aspect.

According to an eighth aspect, a network side device is provided, including a processor and a communication interface, where the communication interface is configured to receive a quantity of CPUs occupied by the first CSI, which is reported by a terminal; and the first CSI is CSI processed based on an AI unit.

According to a ninth aspect, a readable storage medium is provided, where the readable storage medium stores a program or instructions, and the program or instructions, when executed by a processor, implement the steps of the method according to the first aspect, or the steps of the method according to the second aspect.

According to a tenth aspect, a wireless communication system is provided, including a terminal and a network side device, where the terminal may be configured to perform the steps of the method according to the first aspect, and the network side device may be configured to perform the steps of the method according to the second aspect.

According to an eleventh aspect, a chip is provided. The chip includes a processor and a communication interface, where the communication interface is coupled to the processor, and the processor is configured to run a program or instructions to implement the method according to the first aspect, or implement the method according to the second aspect.

According to a twelfth aspect, a computer program/program product is provided, where the computer program/program product is stored in a storage medium, and the program/program product is executed by at least one processor to implement the steps of the method according to the first aspect, or implement the steps of the method according to the second aspect.

In the embodiments of this application, the CSI processed based on the AI unit is defined as the first CSI, and the terminal reports, to the network side device, a quantity of CPUs occupied by the first CSI, so that the terminal can autonomously determine a quantity of CPUs that need to be occupied or used for processing the first CSI. This can effectively improve flexibility of processing the first CSI, so that the terminal can more flexibly and effectively control a process of calculation and processing of the first CSI.

### BRIEF DESCRIPTION OF THE DRAWINGS

FIG. 1 is a block diagram of a wireless communication system to which an embodiment of this application is applicable;
FIG. 2 is a flowchart of a method for reporting a quantity of CPUs according to an embodiment of this application;
FIG. 3 is a flowchart of a method for receiving a quantity of CPUs according to an embodiment of this application;
FIG. 4 is a structural diagram of an apparatus for reporting a quantity of CPUs according to an embodiment of this application;
FIG. 5 is a structural diagram of an apparatus for receiving a quantity of CPUs according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network side device according to an embodiment of this application.

### DETAILED DESCRIPTION

The technical solutions in embodiments of this application are clearly described below with reference to the accompanying drawings in the embodiments of this application. Clearly, the described embodiments are some rather than all of the embodiments of this application. Based on the embodiments of this application, all other embodiments obtained by a person of ordinary skill in the art fall within the protection scope of this application.

The terms such as "first" and "second" in this application are used to distinguish between similar objects and are not intended to describe a specific order or sequence. It should be understood that the terms used in such a way may be interchanged under appropriate circumstances so that the embodiments of this application can be implemented in an order other than those illustrated or described herein, the objects distinguished by "first" and "second" are usually of one type, and a quantity of objects is not limited. For example, one or more first objects may be provided. In addition, "or" in this application indicates at least one of connected objects. For example, "A or B" covers three schemes, namely scheme 1: including A and excluding B; scheme 2: including B and excluding A; and scheme 3: including both A and B. The character "/" in this specification generally indicates an "or" relationship between the associated objects.

The term "indication" in this application may be either a direct indication (or an explicit indication) or an indirect indication (or an implicit indication). The direct indication may be understood as that a sender clearly informs, in an indication sent, a receiver of content such as specific information, an operation needing to be executed, or a request result; and the indirect indication may be understood as that the receiver determines corresponding information or performs determining according to an indication sent by the sender and determines an operation needing to be executed, a request result, or the like according to a determining result.

It should be noted that the technologies described in the embodiments of this application are not limited to a long term evolution (Long Term Evolution, LTE)/LTE-advanced (LTE-Advanced, LTE-A) system, and may be also applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are often used interchangeably, and the described technology can be applied to the systems and radio technologies mentioned above, and can also be applied to other systems and radio technologies. The following describes a new radio (New Radio, NR) system for example purposes, and NR terms are used in most of the following descriptions, but these technologies can also be applied to a system other than the NR system, such as a 6th generation (6^{th} Generation, 6G) communication system.

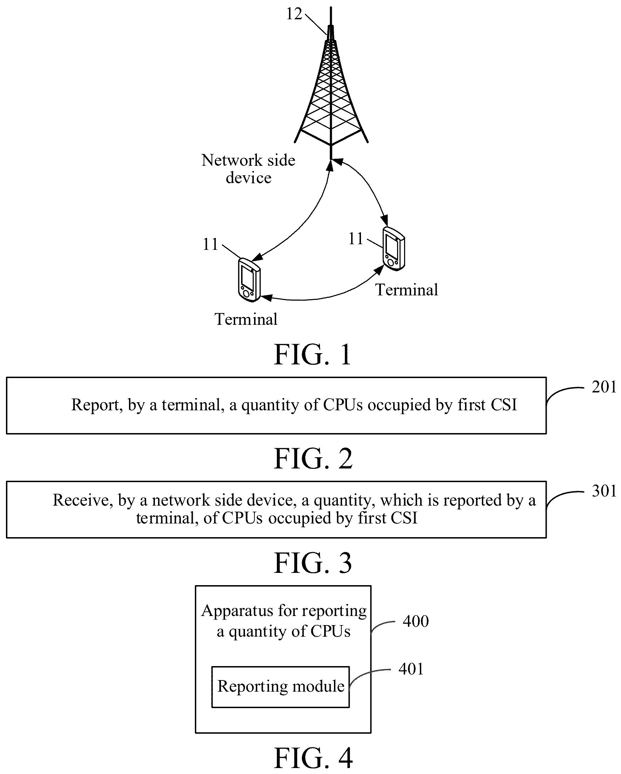

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), shipborne equipment, pedestrian user equipment (Pedestrian User Equipment, PUE), a smart home (a household device with a wireless communication function, such as a refrigerator, a television, a washing machine or furniture), a game console, a personal computer (Personal Computer, PC), an automated teller machine, a self-service machine, or another terminal-side device. The wearable device includes a smartwatch, a smart band, a smart headset, smart glasses, smart jewelry (a smart bracelet, a smart chain bracelet, a smart ring, a smart necklace, a smart anklet, a smart ankle chain, or the like), a smart wrist strap, a smart garment, or the like. The vehicle user equipment may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in the embodiment of this application. The network side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a wireless fidelity (Wireless Fidelity, WiFi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), or another suitable term in the field as long as the same technical effect is achieved, and the base station is not limited to a specific technical word. It should be noted that in the embodiments of this application, description is provided only by taking the base station in the NR system as an example, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (local NEF, or L-NEF), a binding support function (Binding Support Function, BSF), an application function (Application Function, AF), and the like. It should be noted that, in the embodiment of this application, description is provided only by taking a core network device in an NR system as an example, and a specific type of the core network device is not limited.

To better understand the technical solutions provided by the embodiment of this application, the following explains related concepts and principles that may be involved in the embodiment of this application.

According to the information theory, accurate channel state information (Channel State Information, CSI) is crucial to a channel capacity. Especially for a multi-antenna system, a transmitting end may optimize signal transmission according to the CSI for better matching with a channel state. For example, a channel quality indicator (Channel Quality Indicator, CQI) may be used for selecting an appropriate modulation and coding scheme (Modulation and Coding Scheme, MCS) to implement link adaptation; and a precoding matrix indicator (Precoding Matrix Indicator, PMI) may be used for implementing eigen beamforming (eigen beamforming) to maximize strength of a received signal, or suppressing interference (for example, interference between cells or interference between a plurality of users). Therefore, CSI acquisition has been a research hotspot since a multiple-input multiple-output (multi-input multi-output, MIMO) technology is proposed.

Generally, the base station transmits a channel state information reference signal (CSI reference signal, CSI-RS) on some time-frequency resources of a slot. The terminal performs channel estimation according to the CSI-RS, calculates channel information on this slot, and feeds back a PMI to the base station by using a codebook, that is, reports the PMI by using the codebook. The base station obtains channel information by combination according to codebook information fed back by the terminal. Before CSI is reported next time, the base station performs data precoding and multi-user scheduling based on the channel information.

To further reduce CSI feedback overheads, the terminal may change PMI reporting on each sub-band to PMI reporting according to a delay (delay). Since channels in a delay domain are more concentrated, PMIs on all sub-bands can be approximately represented by PMIs with fewer delays. In other words, delay-domain information is compressed before reported.

Similarly, to reduce overheads, the base station can precode the CSI-RS, and transmit an encoded CSI-RS to the terminal. The terminal learns of a channel corresponding to the encoded CSI-RS. The terminal only needs to select several ports having high strength from ports indicated by a network side, and report coefficients corresponding to the ports.

Further, to better compress the channel information, the terminal and the network side device may transmit the channel information by using a neural network or a machine learning method.

Specifically, the channel information is compressed and encoded at the terminal by using an artificial intelligence (Artificial Intelligence, AI) model, and compressed content is decoded at the base station by using a corresponding AI model, to recover the channel information. In this case, the AI model for decoding on the base station side and the AI model for encoding on the terminal side need to be jointly trained, to achieve a proper matching degree. The channel information serves as an input of the encoding AI model, and encoded information, namely channel feature information, serves as an output thereof. The encoded information serves as an input of the decoding AI model, and the recovered channel information serves as an output thereof.

A CPU is a basic unit for a terminal to process CSI. Currently, there are usually two configuration requirements (requirements). In a configuration as requirement1, all CPUs process one piece of CSI together, to complete calculation of the CSI and report the CSI in a shortest time. In a configuration as requirement2, a processing delay may be larger, and a quantity of CPUs allocated for calculation of each piece of CSI is a quantity of corresponding CSI-RS resources.

Currently, the CSI can be processed by using an AI model and then reported. A reporting mechanism of a CPU used in CSI compression performed based on an AI model is unclear, and a conventional CPU control scheme processed based on non-AI (for example, processed based on a codebook) is not applicable to a CSI compression process processed based on an AI model. An embodiment of this application provides a reporting method for CPUs.

A method and apparatus for reporting a quantity of CPUs, a method and apparatus for receiving a quantity of CPUs, a terminal, a network side device, and the like according to embodiments of this application are described in detail below by using some embodiments and application scenarios thereof with reference to the accompanying drawings.

Referring to FIG. 2, FIG. 2 is a flowchart of a method for reporting a quantity of CPUs according to an embodiment of this application. The method is applied to a terminal. As shown in FIG. 2, the method includes the following steps:
Step 201: The terminal reports a quantity of CPUs occupied by first CSI.

The first CSI is CSI processed based on an AI unit.

It should be noted that the AI unit described in this application may also be referred to as an AI model, an AI structure, or the like, or the AI unit may alternatively refer to a processing unit that can implement a specific algorithm, formula, processing procedure, capability, or the like related to AI, or the AI unit may be a processing method, an algorithm, a function, a module, or a unit for a specific data set, or the AI unit may be a processing method, an algorithm, a function, a module, or a unit that runs on AI-related hardware such as a graphics processing unit (Graphics Processing Unit, GPU), a neural-network processing unit (Neural-Network Processing Unit, NPU), a tensor processing unit (Tensor Processing Unit, TPU), or an application specific integrated circuit (Application Specific Integrated Circuit, ASIC). This is not specifically limited in this application.

In addition, there are various manners for implementing an AI function, such as a neural network, a decision tree, a support vector machine, and a Bayesian classifier. This is not specifically limited in this application.

It may be understood that the CPU is a basic unit for the terminal to process CSI. In a related technology, the terminal may perform processing such as compression and encoding on the CSI based on an AI manner, namely by using an AI unit. In addition, the terminal may alternatively process the CSI based on a non-AI manner, for example, based on a conventional codebook manner. When the terminal processes the CSI based on the AI unit, a CPU used for this type of CSI may be different from a CPU used for CSI processed based on a codebook. Currently, a related mechanism of a CPU used for CSI processed based on an AI unit is unclear. In a related technology, a configuration requirement on CPUs corresponding to CSI may be in such a configuration that all CPUs process one piece of CSI together. This easily leads to poor flexibility in CSI processing, and also easily leads to low processing efficiency for CSI processed based on an AI unit.

For the terminal, it is not clear how many CPUs are needed to process CSI processed based on the AI unit, and the network side device cannot determine a quantity of CPUs needed for the terminal to process this type of CSI.

In the embodiment of this application, the CSI processed based on the AI unit is defined as the first CSI, and the terminal reports, to the network side device, a quantity of CPUs occupied by the first CSI, so that the terminal can autonomously determine a quantity of CPUs that need to be occupied or used for processing the first CSI. This can effectively improve flexibility of processing the first CSI, so that the terminal can more flexibly and effectively control a process of calculation and processing of the first CSI, and the network side device can determine, based on the reporting by the terminal, a quantity of CPUs occupied by the terminal for processing the first CSI.

Optionally, the quantity of the CPUs occupied by the first CSI is related to a first parameter, and the first parameter includes at least one of the following:
(1) a quantity of sub-bands, where for example, different quantities of sub-bands may correspond to different quantities of CPUs, or several different quantities of sub-bands may correspond to a same quantity of CPUs;
(2) a quantity of ports, where for example, different quantities of ports may correspond to different quantities of CPUs, or several different quantities of ports may correspond to a same quantity of CPUs;
(3) ranks, where for example, different ranks may correspond to different quantities of CPUs, or different ranks may correspond to a same quantity of CPUs;
(4) a quantity of coefficients of a precoding matrix (precoder) on each layer (layer), where for example, different quantities of coefficients may correspond to different quantities of CPUs, or different quantities of coefficients may correspond to a same quantity of CPUs;
(5) a type or an identifier of the AI unit, where for example, different AI unit types may correspond to different quantities of CPUs, or different AI unit identifiers may correspond to different quantities of CPUs, or different AI unit identifiers may correspond to a same quantity of CPUs;
6) a level of the AI unit, where for example, different levels of the AI unit correspond to different quantities of CPUs, or several different levels of the AI unit correspond to a same quantity of CPUs; if the AI unit is represented by using an AI model, the level of the AI unit may refer to a model level of the AI model;
(7) a complexity of the AI unit, where for example, a higher complexity of the AI unit corresponds to a larger quantity of CPUs, or a higher complexity of the AI unit corresponds to a smaller quantity of CPUs;
(8) whether the first CSI needs to be preprocessed, where for example, a quantity of CPUs corresponding to the first CSI that needs to be preprocessed is a first quantity, and a quantity of CPUs corresponding to the first CSI that does not need to be preprocessed is a second quantity; the preprocessing may refer to orthogonal projection, angle delay domain limitation, port zero padding, sub-band zero padding, or the like on the first CSI;
(9) whether the first CSI needs to be post-processed, where for example, a quantity of CPUs corresponding to the first CSI that needs to be post-processed is a third quantity, and a quantity of CPUs corresponding to the first CSI that does not need to be post-processed is a fourth quantity; the post-processing may refer to orthogonal projection, angle delay domain limitation, port zero padding, sub-band zero padding, truncation, or the like on the first CSI; and
(10) a method for quantization of the first CSI, where for example, when there is a different method for quantization of the first CSI, a quantity of corresponding CPUs may be different.

It should be noted that the identifier of the AI unit may be an AI model identifier, an AI structure identifier, an AI algorithm identifier, or an identifier of a specific data set associated with the AI unit, or an identifier of a specific scenario, environment, channel feature, and device related to the AI, or an identifier of a function, a characteristic, a capability, or a module related to the AI. This is not specifically limited in this application.

In the embodiment of this application, the quantity of CPUs occupied by the first CSI is related to the foregoing first parameter. For example, if the quantity of CPUs is related to the quantity of sub-bands, a correspondence between the quantity of CPUs and the quantity of sub-bands may be pre-constructed, and then the terminal or the network side device can determine, based on the quantity of sub-bands, the quantity of CPUs occupied by the first CSI. Certainly, the terminal may alternatively pre-construct a correspondence between another first parameter and the quantity of CPUs. This is not specifically listed herein. Optionally, the terminal may alternatively report the first parameter, and report, based on a correspondence between the first parameter and the quantity of CPUs, the quantity of CPUs occupied by the first CSI.

Optionally, in step 201, that the terminal reports a quantity of CPUs occupied by first CSI may further specifically include:
the terminal reports a quantity of CPUs occupied by the first CSI under different CSI parameters, where the CSI parameters are parameters related to CSI calculation.

For example, the quantity of CPUs occupied by the first CSI under different CSI parameters may be different, and the terminal reports the quantity of CPUs occupied by the first CSI under different CSI parameters. Then, based on reporting by the terminal, when the network side device configures CSI reporting, the network side device can determine, according to a configured CSI parameter, the quantity of CPUs that can be used by the terminal, thereby further facilitating the determining, by the network side device, of the quantity of CPUs that can be used by the terminal.

In the embodiment of this application, the CSI parameter is a parameter related to CSI calculation, or the CSI parameter affects a complexity of the CSI calculation. Optionally, the CSI parameter includes, but is not limited to, at least one of the following: a quantity of ports, a quantity of sub-bands, a quantity of encoder outputs, whether scalar quantization is performed on a coder output, whether vector quantization is performed on an encoder output, or the like.

In the embodiment of this application, the CPUs may include at least one of the following:
first CPUs and second CPUs, where the first CPUs are CPUs used for a CSI report with a PMI calculated based on the AI unit, and the second CPUs include CPUs needing no calculation of a PMI and CPUs configured to calculate second CSI;
third CPUs, where the third CPUs are configured to perform calculation of the first CSI and calculation of the second CSI, and the third CPUs can perform only the calculation of the first CSI or the calculation of the second CSI at a same time; and
fourth CPUs, where the fourth CPUs are configured to perform the calculation of the first CSI and the calculation of the second CSI at a same time,
where the second CSI is CSI processed based on a non-AI unit.

For example, the CPUs used by the terminal include the first CPU and the second CPU. That is, different CPUs are used for CSI processed based on the AI unit and CSI processed based on the non-AI unit (such as a codebook), respectively. The first CPU is independently configured for a PMI calculation process related to the AI unit or needing to be accelerated by the AI unit. A CSI report (report) needing no calculation of a PMI uses the second CPU. A CSI report including a PMI or needing to use the PMI (for example, to calculate a CQI), with the PMI calculated based on the AI unit, uses the first CPU. In other words, a report quantity (reportQuantity) includes the PMI or the CQI.

Alternatively, the terminal may process the first CSI and the second CSI by using the third CPU. That is, a CPU (that is, the third CPU) may be shared for the CSI processed based on the AI unit and the CSI processed based on the non-AI unit, but one third CPU can simultaneously perform only calculation of the CSI processed based on the AI unit, or calculation of the CSI processed based on the non-AI unit. In this case, the terminal may further perform calculation of the first CSI by using the first CPU, and may further perform calculation of the second CSI by using the second CPU.

Alternatively, the terminal may process the first CSI and the second CSI by using the fourth CPU. That is, a CPU may be shared for the CSI processed based on the AI unit and the CSI processed based on the non-AI unit, and one fourth CPU can simultaneously perform the calculation of the CSI processed based on the AI unit, and the calculation of the CSI processed based on the non-AI unit.

In the embodiment of this application, when the terminal includes the CSI processed based on the AI unit and the CSI processed based on the non-AI unit, for the calculation of the two types of CSI, the terminal may select, in a plurality of manners, different CPUs for processing, so that the calculation and processing of the CSI by the terminal is more flexible.

Optionally, in a case that the CPUs include the first CPUs, the method further includes:
the terminal reports a first capability, where the first capability includes at least one of the following:
a maximum quantity of first CPUs that the terminal supports for simultaneous calculation;
a maximum total quantity of first CPUs and second CPUs that the terminal supports for simultaneous calculation; and
a quantity of first CPUs occupied by each piece of first CSI.

In the embodiment of this application, if the terminal processes, by using the first CPUs, the CSI report with the PMI calculated based on the AI unit, the terminal needs to report the first capability. For example, the terminal may report the maximum quantity of first CPUs that can support simultaneous calculation, or report the maximum total quantity of first CPUs and second CPUs that can support simultaneous calculation, or report the quantity of first CPUs occupied by each piece of first CSI (namely the CSI processed based on the AI unit). In this way, the network side device can determine, based on the first capability reported by the terminal, the quantity of first CPUs used by the terminal for the CSI processed based on the AI unit.

Optionally, in a case that the CPUs include the third CPUs, the method further includes:
the terminal reports a second capability, where the second capability includes at least one of the following:
a quantity of third CPUs that the terminal supports for simultaneous calculation; and
a quantity of third CPUs occupied by each piece of first CSI.

In the embodiment of this application, if the terminal shares the third CPUs for processing of calculation of the CSI processed based on the AI unit and calculation of the CSI processed by the non-AI unit, the terminal may report the second capability. For example, the terminal reports a quantity of third CPUs that support simultaneous calculation, or reports a quantity of third CPUs occupied by each piece of first CSI. Then, the network side device can determine, based on reporting by the terminal, a quantity of third CPUs occupied by the terminal for the CSI processed based on the AI unit.

Optionally, in a case that the CPUs include the first CPUs and a protocol agrees on a quantity of first CPUs needing to be used for a CSI report, the method further includes:
the terminal receives a quantity of first CPUs configured or indicated by a network side device.

For example, a protocol may agree on a quantity of first CPUs needed for each CSI report. In this case, the network side device may further configure the quantity of the first CPUs by radio resource control (Radio Resource Control, RRC), or indicate the quantity of the first CPUs by downlink control information (Downlink Control Information, DCI). Optionally, the quantity of first CPUs configured or indicated by the network side device may be different from the quantity of first CPUs agreed on by the protocol, and the terminal may report the quantity of the first CPUs based on the configuration or indication by the network side device.

Optionally, in a case that the CPUs include the first CPUs and a protocol agrees on a quantity of first CPUs needing to be used for a CSI report, the quantity of the first CPUs is related to a training data set of the AI unit. For example, different training data sets for the AI unit may correspond to different quantities of first CPUs. For example, for an AI unit using a complex training data set, this type of AI unit may correspond to a larger quantity of first CPUs.

It should be noted that the training data set may refer to a data set used for training the AI unit, and may include input data, output data, and the like of the AI unit.

Optionally, in a case that the CPUs includes the first CPUs, a protocol may agree on that one CSI-RS uses one first CPU or one group of first CPUs, where a quantity of first CPUs in the group of first CPUs a quantity of first CPUs needed for the terminal to report one piece of first CSI.

In the embodiment of this application, in a case that the CPUs include the first CPUs and the second CPUs, the method further includes:
the terminal reports the first CSI and the second CSI based on a configuration by a network side device.

It may be understood that, the network side device may configure the terminal to report a plurality of pieces of CSI, including the first CSI processed based on the AI unit and the second CSI processed based on the non-AI unit (for example, a codebook).

Optionally, the method further includes at least one of the following:
the terminal determines, in a case that the first CSI and the second CSI correspond to different CSI reports respectively, a quantity of CPUs needed for the CSI reports according to configuration parameters of the CSI reports;
the terminal determines, in a case that the first CSI and the second CSI correspond to different CSI-RS resources respectively, a quantity of the first CPUs and a quantity of the second CPUs according to a quantity of the CSI-RS resources corresponding to the first CSI and a quantity of the CSI-RS resources corresponding to the second CSI; and
the terminal determines, in a case that the first CSI and the second CSI correspond to same CSI-RS resources, according to a quantity of the CSI-RS resources, a quantity of first CPUs that need to be used.

For example, when the CSI processed based on the AI unit and the CSI processed based on the non-AI unit correspond to different CSI reports respectively, the terminal may determine, according to a configuration parameter of each CSI report, a quantity of CPUs needed, namely, a quantity of CPUs needed for each CSI report.

Alternatively, when the CSI processed based on the AI unit and the CSI processed based on the non-AI unit correspond to different CSI-RS resources respectively, the terminal may determine the quantity of the first CPUs according to a quantity of CSI-RS resources corresponding to the CSI processed based on the AI unit, and determine the quantity of the second CPUs according to a quantity of CSI-RS resources corresponding to the CSI processed based on the non-AI unit.

Alternatively, when the CSI processed based on the AI unit and the CSI processed based on the non-AI unit correspond to same CSI-RS resources, the terminal may determine the quantity of the first CPUs according to a quantity of the CSI-RS resources.

Optionally, in a case that the first CSI and the second CSI correspond to different CSI-RS resources respectively, a quantity of CPUs used in each CSI report is a first quantity, and the first quantity is a maximum value or a minimum value between the quantity of the first CPUs and the quantity of the second CPUs. That is, the quantity of CPUs used in a CSI report is the same, and the quantity may be a maximum value or a minimum value between the quantity of the first CPUs and the quantity of the second CPUs.

In the embodiment of this application, the method may further include at least one of the following:
the terminal determines a priority order of the first CSI according to priorities of the first CSI in a case that the CPUs include the first CPUs and the second CPUs;
the terminal determines a priority order of the first CSI and the second CSI according to priorities of the first CSI and priorities of the second CSI in a case that the CPUs include the third CPUs; and
the terminal determines a priority order of the first CSI according to priorities of the first CSI in a case that the CPU includes the third CPUs, where priorities of all the first CSI are higher or lower than priorities of the second CSI.

For example, when the terminal includes a first CPU configured to perform calculation of the first CSI and a second CPU configured to perform calculation of the second CSI, the terminal may determine a priority order of the first CSI according to priorities of the first CSI, that is, independently sequence the priorities of the first CSI. Priorities of the second CSI may also be independently sequenced. That is, the priorities of the first CSI and the priorities of the second CSI are sequenced separately, so that the priority order of the CSI processed based on AI can be obtained independently.

Optionally, in a case that the CPUs include the first CPUs and the second CPUs and the terminal determines the priority order of the first CSI according to the priorities of the first CSI, the method further includes:
the terminal selects, according to a quantity of first CPUs needed for a CSI report of the first CSI and the priorities of the first CSI, high-priority first CSI that satisfies a target condition, and reports the high-priority first CSI, where the target condition is a maximum quantity of first CPUs simultaneously processable by the terminal.

That is, the terminal selects, according to a quantity of first CPUs needed for a CSI report of each piece of CSI (namely the first CSI) processed based on the AI unit and the priority of the CSI (namely the first CSI) processed based on the AI unit, high-priority first CSI that can satisfy a maximum quantity of first CPUs that can be simultaneously processed by the terminal, and reports the high-priority first CSI. For example, a maximum quantity of first CPUs that can be simultaneously processed by the terminal is 16. The first CSI is sequenced in descending order of priorities. Processing of the first piece of first CSI (namely first CSI with a highest priority) needs to use 6 first CPUs, processing of the second piece of first CSI needs to use 6 first CPUs, and processing of the third piece of first CSI also needs to use 6 first CPUs. Therefore, the terminal reports only the first two pieces of first CSI, namely the first piece of first CSI and the second piece of first CSI. Because 12 first CPUs have been used for the processing of the first two pieces of first CSI, the maximum quantity of first CPUs that can be simultaneously processed by the terminal is 16, and the remaining 4 first CPUs do not satisfy processing of the third piece of first CSI. Therefore, only the first two pieces of first CSI are reported. In this way, the network side device can determine, based on the reporting by the terminal, a quantity of first CPUs actually used by the terminal.

Optionally, when the terminal performs the calculation of the first CSI and the calculation of the second CSI by using the third CPUs, the first CSI and the second CSI may be mixed for priority sequencing, to share all the third CPUs together.

Alternatively, when the terminal performs calculation of the first CSI and calculation of the second CSI by using the third CPUs, the terminal sequences priorities of the first CSI separately, that is, independently sequences priorities of the CSI processed based on the AI unit. Priorities of the sequenced first CSI are all higher than priorities of the second CSI, or are all lower than priorities of the second CSI. That is, the priorities of the first CSI are all before or after those of the second CSI in sequence.

Optionally, the third CPUs can perform calculation of at least one piece of first CSI. For example, a quantity of pieces of first CSI that can be processed by each third CPU may be agreed on by a protocol or configured by a network side device, mainly for the calculation of CSI including the PMI. The process of calculation by the AI unit may be completed by a special AI accelerator. Therefore, one third CPU can perform the calculation of first CSI on a plurality of resources.

Optionally, in a case that the CPUs include the third CPUs and a network side device indicates the terminal to report at least one piece of CSI, the method further includes:
the terminal determines, according to a protocol agreement or an indication by the network side device, a quantity of third CPUs needed for each CSI report.

That is, in a case that the network side device indicates reporting of a plurality of pieces of CSI, the terminal may determine, according to a protocol agreement or an indication by the network side device, a quantity of third CPUs needed for each CSI report.

Optionally, in a case that the CPUs include the fourth CPUs and the second CPUs, the method further includes:
the terminal reports a maximum quantity of the fourth CPUs and a maximum quantity of the second CPUs.

For example, if the terminal includes CPUs (namely the second CPUs) that can process only the second CSI (namely the CSI processed by the non-AI unit) and includes CPUs (namely the fourth CPUs) that can simultaneously process both the CSI processed based on the non-AI unit and the CSI processed based on the AI unit, the terminal needs to report a maximum quantity of the two types of CPUs.

Optionally, in a case that the CPUs include the fourth CPUs, the method further includes at least one of the following:
the terminal processes the first CSI and the second CSI by using the fourth CPUs in a case that the terminal simultaneously reports the first CSI and the second CSI by using one CSI-RS resource; and
the terminal processes, in a case that one CSI report includes the first CSI and the second CSI, the first CSI and the second CSI that correspond to the CSI report by using the fourth CPUs.

For example, if the terminal processes the first CSI and the second CSI by using the fourth CPUs, the network side device may indicate the terminal to report a plurality of pieces of CSI.

Optionally, if one CSI-RS resource needs to simultaneously report the first CSI and the second CSI, the terminal may process the first CSI and the second CSI by using a fourth CPU. If a CSI-RS resource needs to report the first CSI and another CSI-RS resource needs to report the second CSI, the terminal may process the first CSI and the second CSI by using two fourth CPUs respectively.

Alternatively, if one CSI report needs first CSI processed based on thee AI unit and second CSI processed based on the non-AI unit, the CSI report may simultaneously process the first CSI and the second CSI by using a fourth CPU.

In the embodiment of this application, the terminal reports the quantity of CPUs needed for the CSI processed based on the AI unit, and processes, by using an independent first CPU, a calculation process related to the PMI of the AI unit, which is performed separately and independently from the CSI processed by the non-AI unit. Therefore, the CSI processing and calculation process can be controlled more flexibly and effectively.

Referring to FIG. 3, FIG. 3 is a flowchart of a method for receiving a quantity of CPUs according to an embodiment of this application. The method is applied to a network side device. As shown in FIG. 3, the method includes the following steps:
Step 301: The network side device receives a quantity, which is reported by a terminal, of CPUs occupied by first CSI.

The first CSI is CSI processed based on an AI unit.

Optionally, the quantity of the CPUs occupied by the first CSI is related to a first parameter, and the first parameter includes at least one of the following:
a quantity of sub-bands;
a quantity of ports;
ranks;
a quantity of coefficients of a precoding matrix on each layer;
a type or an identifier of the AI unit;
a level of the AI unit;
a complexity of the AI unit;
whether the first CSI needs to be preprocessed;
whether the first CSI needs to be post-processed; and
a method for quantization of the first CSI.

Optionally, that the network side device receives a quantity, which is reported by a terminal, of CPUs occupied by first CSI includes:
the network side device receives a quantity, which is reported by the terminal, of CPUs occupied by the first CSI under different CSI parameters, where the CSI parameters are parameters related to CSI calculation.

Optionally, the method further includes:
the network side device determines a quantity of CPUs usable for the first CSI of the terminal according to a configured CSI parameter.

Optionally, the CPUs include at least one of the following:
first CPUs and second CPUs, where the first CPUs are CPUs used for a CSI report with a PMI calculated based on the AI unit, and the second CPUs include CPUs needing no calculation of a PMI and CPUs configured to calculate second CSI;
third CPUs, where the third CPUs are configured to perform calculation of the first CSI and calculation of the second CSI, and the third CPUs can perform only the calculation of the first CSI or the calculation of the second CSI at a same time; and
fourth CPUs, where the fourth CPUs are configured to perform the calculation of the first CSI and the calculation of the second CSI at a same time,
where the second CSI is CSI processed based on a non-AI unit.

Optionally, in a case that the CPUs include the first CPUs, the method further includes:
the network side device receives a first capability reported by the terminal, where the first capability includes at least one of the following:
a maximum quantity of first CPUs that the terminal supports for simultaneous calculation;
a maximum total quantity of first CPUs and second CPUs that the terminal supports for simultaneous calculation; and
a quantity of first CPUs occupied by each piece of first CSI.

Optionally, in a case that the CPUs include the third CPUs, the method further includes:
the network side device receives a second capability reported by the terminal, where the second capability includes at least one of the following:
a quantity of third CPUs that the terminal supports for simultaneous calculation; and
a quantity of third CPUs occupied by each piece of first CSI.

Optionally, in a case that the CPUs include the first CPUs and a protocol agrees on a quantity of first CPUs needing to be used for a CSI report, the method further includes:
configuring or indicating, by the network side device, a quantity of first CPUs usable by the terminal.

Optionally, in a case that the CPUs include the first CPUs and the second CPUs, the method further includes:
the network side device configures the terminal to report the first CSI and the second CSI.

Optionally, in a case that the CPUs include the fourth CPUs and the second CPUs, the method further includes:
the network side device receives a maximum quantity of fourth CPUs and a maximum quantity of second CPUs that are reported by the terminal.

It should be noted that, the method for receiving a quantity of CPUs according to the embodiment of this application corresponds to the above-mentioned method for reporting a quantity of CPUs that is applied to a terminal side. For related concepts and specific implementation processes involved in the embodiment of this application, reference may be made to the descriptions in the method embodiment in FIG. 2. Details are not described herein.

In the embodiment of this application, the CSI processed based on the AI unit is defined as the first CSI, and the network side device can receive a quantity, which is reported by the terminal, of CPUs occupied by the first CSI, so that the terminal can autonomously determine a quantity of CPUs that need to be occupied or used for processing the first CSI. This can effectively improve flexibility of processing the first CSI by the terminal, so that the terminal can more flexibly and effectively control a process of calculation and processing of the first CSI, and the network side device can determine, based on the reporting by the terminal, a quantity of CPUs occupied by the terminal for processing the first CSI.

An execution body of the method for reporting a quantity of CPUs according to the embodiment of this application may be an apparatus for reporting a quantity of CPUs. In the embodiment of this application, the apparatus for reporting a quantity of CPUs according to an embodiment of this application is described with an example in which the apparatus for reporting a quantity of CPUs performs the method for reporting a quantity of CPUs.

Referring to FIG. 4, FIG. 4 is a structural diagram of an apparatus for reporting a quantity of CPUs according to an embodiment of this application. As shown in FIG. 4, the apparatus 400 for reporting a quantity of CPUs includes:
a reporting module 401, configured to report a quantity of CPUs occupied by first CSI,
where the first CSI is CSI processed based on an AI unit.

Optionally, the quantity of the CPUs occupied by the first CSI is related to a first parameter, and the first parameter includes at least one of the following:
a quantity of sub-bands;
a quantity of ports;
ranks;
a quantity of coefficients of a precoding matrix on each layer;
a type or an identifier of the AI unit;
a level of the AI unit;
a complexity of the AI unit;
whether the first CSI needs to be preprocessed;
whether the first CSI needs to be post-processed; and
a method for quantization of the first CSI.

Optionally, the reporting module 401 is further configured to:
report a quantity of CPUs occupied by the first CSI under different CSI parameters, where the CSI parameters are parameters related to CSI calculation.

Optionally, the CPUs include at least one of the following:
first CPUs and second CPUs, where the first CPUs are CPUs used for a CSI report with a precoding matrix indicator PMI calculated based on the AI unit, and the second CPUs include CPUs needing no calculation of a PMI and CPUs configured to calculate second CSI;
third CPUs, where the third CPUs are configured to perform calculation of the first CSI and calculation of the second CSI, and the third CPUs can perform only the calculation of the first CSI or the calculation of the second CSI at a same time; and
fourth CPUs, where the fourth CPUs are configured to perform the calculation of the first CSI and the calculation of the second CSI at a same time,
where the second CSI is CSI processed based on a non-AI unit.

Optionally, in a case that the CPUs include the first CPUs, the reporting module 401 is further configured to:
report a first capability, where the first capability includes at least one of the following:
a maximum quantity of first CPUs that the apparatus supports for simultaneous calculation;
a maximum total quantity of first CPUs and second CPUs that the apparatus supports for simultaneous calculation; and
a quantity of first CPUs occupied by each piece of first CSI.

Optionally, in a case that the CPUs include the third CPUs, the reporting module 401 is further configured to:
report a second capability, where the second capability includes at least one of the following:
a quantity of third CPUs that the apparatus supports for simultaneous calculation; and
a quantity of third CPUs occupied by each piece of first CSI.

Optionally, in a case that the CPUs include the first CPUs and a protocol agrees on a quantity of first CPUs needing to be used for a CSI report, the apparatus further includes:
a receiving module, configured to receive a quantity of first CPUs configured or indicated by a network side device.

Optionally, in a case that the CPUs include the first CPUs and a protocol agrees on a quantity of first CPUs needing to be used for a CSI report, the quantity of the first CPUs is related to a training data set of the AI unit.

Optionally, in a case that the CPUs includes the first CPUs, a protocol agrees on that one CSI-RS uses one first CPU or one group of first CPUs, and a quantity of first CPUs in the group of first CPUs a quantity of first CPUs needed for the apparatus to report one piece of first CSI.

Optionally, in a case that the CPUs include the first CPUs and the second CPUs, the reporting module 401 is further configured to:
report the first CSI and the second CSI based on a configuration by a network side device.

Optionally, the apparatus further includes a determining module, configured to execute at least one of the following:
in a case that the first CSI and the second CSI correspond to different CSI reports respectively, a quantity of CPUs needed for the CSI reports is determined according to configuration parameters of the CSI reports;
in a case that the first CSI and the second CSI correspond to different CSI-RS resources respectively, a quantity of the first CPUs and a quantity of the second CPUs are determined according to a quantity of the CSI-RS resources corresponding to the first CSI and a quantity of the CSI-RS resources corresponding to the second CSI; and
in a case that the first CSI and the second CSI correspond to same CSI-RS resources, a quantity of first CPUs that need to be used is determined according to a quantity of the CSI-RS resources.

Optionally, in a case that the first CSI and the second CSI correspond to different CSI-RS resources respectively, a quantity of CPUs used in each CSI report is a first quantity, and the first quantity is a maximum value or a minimum value between the quantity of the first CPUs and the quantity of the second CPUs.

Optionally, the determining module is further configured to execute at least one of the following:
a priority order of the first CSI is determined according to priorities of the first CSI in a case that the CPUs include the first CPUs and the second CPUs;
a priority order of the first CSI and the second CSI is determined according to priorities of the first CSI and priorities of the second CSI in a case that the CPUs include the third CPUs; and
a priority order of the first CSI is determined according to priorities of the first CSI in a case that the CPU includes the third CPUs, where priorities of all the first CSI are higher or lower than priorities of the second CSI.

Optionally, the reporting module 401 is further configured to:
select, according to a quantity of first CPUs needed for a CSI report of the first CSI and the priorities of the first CSI, high-priority first CSI that satisfies a target condition, and report the high-priority first CSI, where the target condition is a maximum quantity of first CPUs simultaneously processable by the apparatus.

Optionally, the third CPUs can perform calculation of at least one piece of first CSI.

Optionally, in a case that the CPUs include the third CPUs and a network side device indicates reporting of at least one piece of CSI, the apparatus is further configured to:
determine, according to a protocol agreement or an indication by the network side device, a quantity of third CPUs needed for each CSI report.

Optionally, in a case that the CPUs include the fourth CPUs and the second CPUs, the reporting module 401 is further configured to:
report a maximum quantity of the fourth CPUs and a maximum quantity of the second CPUs.

Optionally, in a case that the CPUs include the fourth CPUs, the apparatus is further configured for at least one of the following:
the apparatus processes the first CSI and the second CSI by using the fourth CPUs in a case that the apparatus simultaneously reports the first CSI and the second CSI by using one CSI-RS resource; and
the apparatus processes, in a case that one CSI report includes the first CSI and the second CSI, the first CSI and the second CSI that correspond to the CSI report by using the fourth CPUs.

In the embodiment of this application, the apparatus reports, to the network side device, a quantity of CPUs occupied by the first CSI, so that the apparatus can autonomously determine a quantity of CPUs that need to be occupied or used for processing the first CSI. This can effectively improve flexibility of processing the first CSI, thereby more flexibly and effectively controlling a process of calculation and processing of the first CSI.

The apparatus for reporting a quantity of CPUs in the embodiment of this application may be an electronic device, such as an electronic device with an operating system, or may be a component in the electronic device, such as an integrated circuit or a chip. The electronic device may be a terminal or another device other than the terminal. For example, the terminal may include, but is not limited to, the types of the terminal 11 listed above, and the another device may be a server, a network attached storage (Network Attached Storage, NAS), or the like. This is not specifically limited in the embodiment of this application.

The apparatus for reporting a quantity of CPUs according to the embodiment of this application can implement each process implemented by the terminal in the method embodiment of FIG. 2, and achieve the same technical effect. To avoid repetition, details are not described herein.

An execution body of the method for receiving a quantity of CPUs according to the embodiment of this application may be an apparatus for receiving a quantity of CPUs. In the embodiment of this application, the apparatus for receiving a quantity of CPUs according to an embodiment of this application is described with an example in which the apparatus for receiving a quantity of CPUs performs the method for receiving a quantity of CPUs.

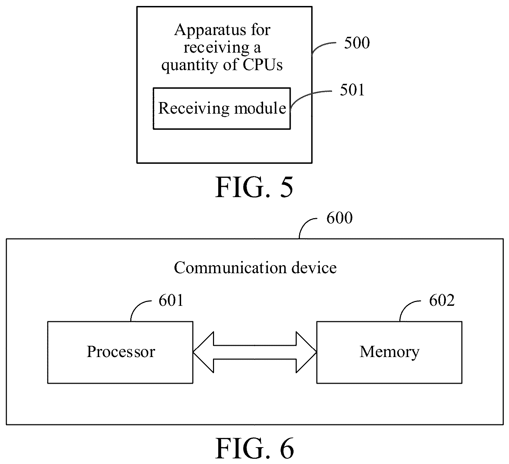

Referring to FIG. 5, FIG. 5 is a structural diagram of an apparatus for receiving a quantity of CPUs according to an embodiment of this application. As shown in FIG. 5, the apparatus 500 for receiving a quantity of CPUs includes:
a receiving module 501, configured to receive a quantity, which is reported by a terminal, of CPUs occupied by first CSI,
where the first CSI is CSI processed based on an AI unit.

Optionally, the receiving module 501 is further configured to:
receive a quantity, which is reported by the terminal, of CPUs occupied by the first CSI under different CSI parameters, where the CSI parameters are parameters related to CSI calculation.

Optionally, the apparatus further includes:
a determining module, configured to determine a quantity of CPUs usable for the first CSI of the terminal according to a configured CSI parameter.

Optionally, the CPUs include at least one of the following:
first CPUs and second CPUs, where the first CPUs are CPUs used for a CSI report with a PMI calculated based on the AI unit, and the second CPUs includes CPUs needing no calculation of a PMI and CPUs configured to calculate second CSI;
third CPUs, where the third CPUs are configured to perform calculation of the first CSI and calculation of the second CSI, and the third CPUs can perform only the calculation of the first CSI or the calculation of the second CSI at a same time; and
fourth CPUs, where the fourth CPUs are configured to perform the calculation of the first CSI and the calculation of the second CSI at a same time,
where the second CSI is CSI processed based on a non-AI unit.

Optionally, in a case that the CPUs include the first CPUs, the receiving module 501 is further configured to:
report a first capability reported by the terminal, where the first capability includes at least one of the following:
a maximum quantity of first CPUs that the terminal supports for simultaneous calculation;
a maximum total quantity of first CPUs and second CPUs that the terminal supports for simultaneous calculation; and
a quantity of first CPUs occupied by each piece of first CSI.

Optionally, in a case that the CPUs include the third CPUs, the receiving module 501 is further configured to:
receive a second capability reported by the terminal, where the second capability includes at least one of the following:
a quantity of third CPUs that the terminal supports for simultaneous calculation; and
a quantity of third CPUs occupied by each piece of first CSI.

Optionally, in a case that the CPUs include the first CPUs and a protocol agrees on a quantity of first CPUs needing to be used for a CSI report, the apparatus further includes:
a processing module, configured to configure or indicate a quantity of first CPUs usable by the terminal.

Optionally, in a case that the CPUs include the first CPUs and the second CPUs, the apparatus further includes:
a configuration module, configured to configure the terminal to report the first CSI and the second CSI.

Optionally, in a case that the CPUs include the fourth CPUs and the second CPUs, the receiving module 501 is further configured to:
receive a maximum quantity of the fourth CPUs and a maximum quantity of the second CPUs, which are reported by the terminal.

In the embodiment of this application, the CSI processed based on the AI unit is defined as the first CSI, and the apparatus can receive a quantity, which is reported by the terminal, of CPUs occupied by the first CSI, so that the apparatus can determine, based on the reporting by the terminal, a quantity of CPUs occupied by the terminal for processing the first CSI.

The apparatus for receiving a quantity of CPUs according to the embodiment of this application can implement each process implemented by the network side device in the method embodiment of FIG. 3, and achieve the same technical effect. To avoid repetition, details are not described herein.

As shown in FIG. 6, an embodiment of this application further provides a communication device 600, including a processor 601 and a memory 602. The memory 602 stores a program or instructions runnable on the processor 601. For example, when the communication device 600 is a terminal, the program or instructions, when executed by the processor 601, implement each step of the above-mentioned embodiment of the method for reporting a quantity of CPUs. This can achieve the same technical effect. When the communication device 600 is a network side device, the program or instructions, when executed by the processor 601, implement each step of the above-mentioned embodiment of the method for receiving a quantity of CPUs. This can achieve the same technical effect. To avoid repetition, details are not described herein.

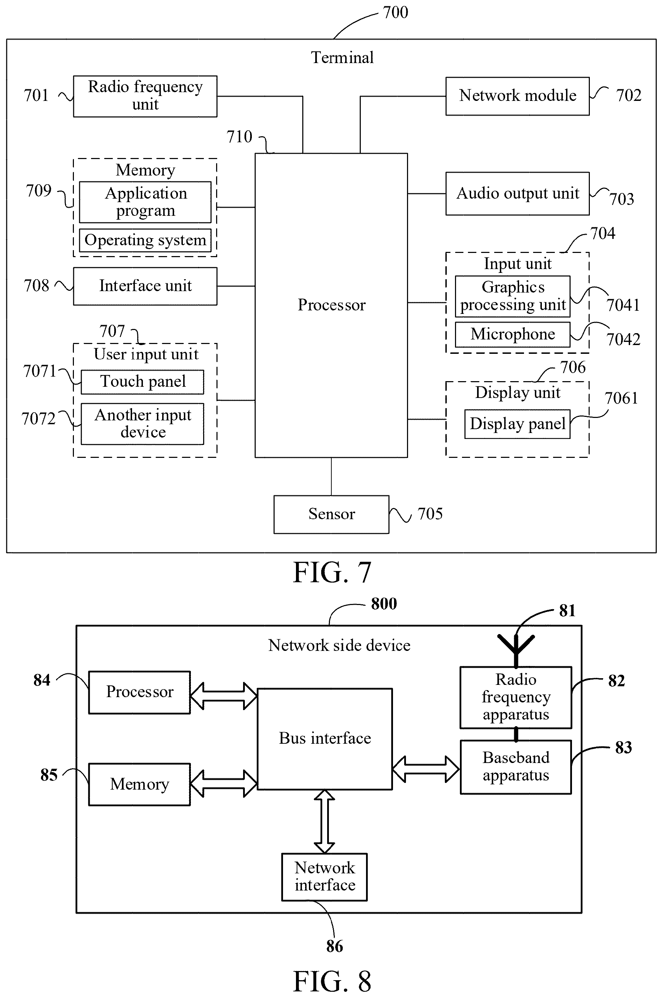

An embodiment of this application further provides a terminal, including a processor and a communication interface, where the communication interface is coupled to the processor, and the processor is configured to run a program or instructions to implement the steps in the method embodiment shown in FIG. 2. The terminal embodiment corresponds to the above-mentioned terminal side method embodiment, and each implementation process and implementation of the above-mentioned method embodiment can be applied to the terminal embodiment. This can achieve the same technical effect. Specifically, FIG. 7 is a schematic diagram of a hardware structure of a terminal according to an embodiment of this application.

The terminal 700 includes, but is not limited to, at least some of the following components: a radio frequency unit 701, a network module 702, an audio output unit 703, an input unit 704, a sensor 705, a display unit 706, a user input unit 707, an interface unit 708, a memory 709, and a processor 710.

It may be understood by a person skilled in the art that the terminal 700 may further include a power supply (such as a battery) for supplying power to various components. The power supply may be logically connected to the processor 710 by using a power management system, so as to achieve charging, discharging, power consumption management and other functions by using the power management system. The terminal structure shown in FIG. 7 does not constitute a limitation on the terminal. The terminal may include more or fewer components than those shown, or combine some components, or have different component arrangements. Details are not described herein.

It should be understood that in the embodiment of this application, the input unit 704 may include a graphics processing unit (Graphics Processing Unit, GPU) 7041 and a microphone 7042. The graphics processing unit 7041 processes image data of a still picture or a video that is obtained by an image acquisition apparatus (for example, a camera) in a video acquisition mode or an image acquisition mode. The display unit 706 may include a display panel 7061, and the display panel 7061 may be configured in the form of a liquid crystal display, an organic light emitting diode, or the like. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include, but is not limited to, a physical keyboard, a functional key (such as a volume control key or an on/off key), a track ball, a mouse, and a joystick. Details are not described herein.

In the embodiment of this application, after receiving downlink data from a network side device, the radio frequency unit 701 may transmit the data to the processor 710 for processing. In addition, the radio frequency unit 701 may transmit uplink data to the network side device. Generally, the radio frequency unit 701 includes, but is not limited to, an antenna, an amplifier, a transceiver, a coupler, a low noise amplifier, and a duplexer.

The memory 709 may be configured to store a software program or instructions and various data. The memory 709 may mainly include a first storage area for storing a program or instructions and a second storage area for storing data, where the first storage area may store an operating system, an application program or instructions required for at least one function (such as a sound playing function and an image playing function), and the like. In addition, the memory 709 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in the embodiment of this application includes, but is not limited to, these and any other suitable types of memories.

The processor 710 may include one or more processing units. Optionally, the processor 710 integrates an application processor and a modem processor, where the application processor mainly processes operations involving an operating system, a user interface, an application program, and the like, and the modem processor mainly processes wireless communication signals, such as a baseband processor. It may be understood that, the modem processor may alternatively not be integrated into the processor 710.

The radio frequency unit 701 is configured to report a quantity of CPUs occupied by first CSI; and the first CSI is CSI processed based on an AI unit.

In the embodiment of this application, the CSI processed based on the AI unit is defined as the first CSI, and the terminal reports, to the network side device, a quantity of CPUs occupied by the first CSI, so that the terminal can autonomously determine a quantity of CPUs that need to be occupied or used for processing the first CSI. This can effectively improve flexibility of processing the first CSI, so that the terminal can more flexibly and effectively control a process of calculation and processing of the first CSI.

It may be understood that, for the implementation process of each implementation mentioned in this embodiment, reference may be made to the related description of the method for reporting a quantity of CPUs in the method embodiment of FIG. 2, and the same or corresponding technical effect is achieved. To avoid repetition, details are not described herein.

An embodiment of this application further provides a network side device, including a processor and a communication interface. The communication interface is coupled to the processor, and the processor is configured to run a program or instructions to implement the steps in the method embodiment shown in FIG. 3. The network side device embodiment corresponds to the above-mentioned method embodiment for the network side device, and each implementation process and implementation of the above-mentioned method embodiment can be applied to the network side device embodiment. This can achieve the same technical effect.

Specifically, an embodiment of this application further provides a network side device. As shown in FIG. 8, a network side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81 and transmits the received information to the baseband apparatus 83 for processing. In a downlink direction, the baseband apparatus 83 processes information to be transmitted and transmits processed information to the radio frequency apparatus 82. The radio frequency apparatus 82 processes the received information and transmits processed information through the antenna 81.

The method performed by the network side device in the above-mentioned embodiment may be implemented in the baseband apparatus 83. The baseband apparatus 83 includes a baseband processor.

For example, the baseband apparatus 83 may include at least one baseband board, and a plurality of chips are arranged on the baseband board. As shown in FIG. 8, one of the chips is, for example, a baseband processor, and is connected to the memory 85 through a bus interface, so as to invoke a program in the memory 85 to perform an operation of a network device shown in the above-mentioned method embodiment.

The network side device may further include a network interface 86. The interface is, for example, a common public radio interface (Common Public Radio Interface, CPRI).

Specifically, the network side device 800 according to the embodiment of this application further includes: instructions or a program stored in the memory 85 and runnable on the processor 84. The processor 84 invokes the instructions or program in the memory 85 to perform the method performed by each module shown in FIG. 5, to achieve the same technical effect. To avoid repetition, details are not described herein.

An embodiment of this application further provides a readable storage medium. A program or instructions are stored on the readable storage medium. The program or instructions, when executed by a processor, implement each process of the above-mentioned embodiment of the method for reporting a quantity of CPUs, or implement each process of the above-mentioned embodiment of the method for receiving a quantity of CPUs. This can achieve the same technical effect. To avoid repetition, details are not described herein.

The processor is the processor in the terminal in the above-mentioned embodiment. The readable storage medium includes a computer-readable storage medium, such as computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor, and the processor is configured to run a program or instructions to implement each process of the above-mentioned embodiment of the method for reporting a quantity of CPUs, or implement each process of the above-mentioned embodiment of the method for receiving a quantity of CPUs, which can achieve the same technical effect. To avoid repetition, details are not described herein.

It should be understood that the chip mentioned in the embodiment of this application may also be referred to as a system on chip, a system chip, a chip system, a system-on-a-chip, or the like.

An embodiment of this application further provides a computer program/program product. The computer program/program product is stored on a storage medium. The computer program/program product is executed by at least one processor to implement each process of the above-mentioned embodiment of the method for reporting a quantity of CPUs, or implement each process of the above-mentioned embodiment of the method for receiving a quantity of CPUs, which can achieve the same technical effect. To avoid repetition, details are not described herein.

An embodiment of this application further provides a communication system, including a terminal and a network side device. The terminal may be configured to perform the steps of the above-mentioned method for reporting a quantity of CPUs. The network side device may be configured to perform the steps of the above-mentioned method for receiving a quantity of CPUs.

It should be noted that terms "including", "comprising" or any other variants thereof are intended to cover non-exclusive inclusion, so that a process, method, article, or apparatus including a series of elements includes not only those elements but also other elements not explicitly listed, or elements inherent to such a process, method, article, or apparatus. Without further limitation, an element defined by the phrase "including a ..." does not exclude the presence of an additional identical element in the process, method, article, or apparatus including the element. In addition, it should be noted that the scope of the method and apparatus in the implementations of this application is not limited to performing functions in the order shown or discussed, but also may include performing functions in a substantially simultaneous manner or in a reverse order according to the functions involved. For example, the described method may be performed in an order different from that described, and various steps may be further added, omitted or combined. In addition, features described with reference to some examples can be combined in other examples.

Through the description of the foregoing implementations, a person skilled in the art can clearly understand that the method in the above-mentioned embodiment can be implemented by a computer software product plus a necessary universal hardware platform, or certainly, can be implemented by hardware. The computer software product is stored in a storage medium (such as an ROM, an RAM, a magnetic disk, or an optical disc), including several instructions to cause a terminal or a network side device to perform the method according to each of the embodiments of this application.

The embodiments of this application are described above with reference to the accompanying drawings, but this application is not limited to the specific implementations described above, and the specific implementations described above are merely illustrative and not restrictive. A person of ordinary skill in the art may further make implementations in many forms under the teaching of this application without departing from the purpose of this application and the protection scope of the claims, and these implementations all fall within the protection scope of this application.

## Claims

1. A method for reporting a quantity of channel state information processing units CPUs, comprising:
reporting, by a terminal, a quantity of channel state information processing units CPUs occupied by first channel state information CSI,
wherein the first CSI is CSI processed based on an artificial intelligence AI unit.

2. The method according to claim 1, wherein the quantity of the CPUs occupied by the first CSI is related to a first parameter, and the first parameter comprises at least one of the following:
a quantity of sub-bands;
a quantity of ports;
ranks;
a quantity of coefficients of a precoding matrix on each layer;
a type or an identifier of the AI unit;
a level of the AI unit;
a complexity of the AI unit;
whether the first CSI needs to be preprocessed;
whether the first CSI needs to be post-processed; and
a method for quantization of the first CSI.

3. The method according to claim 1, wherein the reporting, by a terminal, a quantity of CPUs occupied by first CSI comprises:
reporting, by the terminal, a quantity of CPUs occupied by the first CSI under different CSI parameters, wherein the CSI parameters are parameters related to CSI calculation.

4. The method according to any one of claims 1 to 3, wherein the CPUs comprise at least one of the following:
first CPUs and second CPUs, wherein the first CPUs are CPUs used for a CSI report with a precoding matrix indicator PMI calculated based on the AI unit, and the second CPUs comprise CPUs needing no calculation of a PMI and CPUs configured to calculate second CSI;
third CPUs, wherein the third CPUs are configured to perform calculation of the first CSI and calculation of the second CSI, and the third CPUs are capable of performing only the calculation of the first CSI or the calculation of the second CSI at a same time; and
fourth CPUs, wherein the fourth CPUs are configured to perform the calculation of the first CSI and the calculation of the second CSI at a same time,
wherein the second CSI is CSI processed based on a non-AI unit.

5. The method according to claim 4, wherein in a case that the CPUs comprise the first CPUs, the method further comprises:
reporting, by the terminal, a first capability, wherein the first capability comprises at least one of the following:
a maximum quantity of first CPUs that the terminal supports for simultaneous calculation;
a maximum total quantity of first CPUs and second CPUs that the terminal supports for simultaneous calculation; and
a quantity of first CPUs occupied by each piece of first CSI.

6. The method according to claim 4, wherein in a case that the CPUs comprise the third CPUs, the method further comprises:
reporting, by the terminal, a second capability, wherein the second capability comprises at least one of the following:
a quantity of third CPUs that the terminal supports for simultaneous calculation; and
a quantity of third CPUs occupied by each piece of first CSI.

7. The method according to claim 4, wherein in a case that the CPUs comprise the first CPUs and a protocol agrees on a quantity of first CPUs needing to be used for a CSI report, the method further comprises:
receiving, by the terminal, a quantity of first CPUs configured or indicated by a network side device.

8. The method according to claim 4, wherein in a case that the CPUs comprise the first CPUs and a protocol agrees on a quantity of first CPUs needing to be used for a CSI report, the quantity of the first CPUs is related to a training data set of the AI unit.

9. The method according to claim 4, wherein in a case that the CPUs comprise the first CPUs, a protocol agrees on that one CSI-RS uses one first CPU or one group of first CPUs, and a quantity of first CPUs in the group of first CPUs is a quantity of first CPUs needed for the terminal to report one piece of first CSI.

10. The method according to claim 4, wherein in a case that the CPUs comprise the first CPUs and the second CPUs, the method further comprises:
reporting, by the terminal, the first CSI and the second CSI based on a configuration by a network side device.

11. The method according to claim 10, wherein the method further comprises at least one of the following:
determining, by the terminal, in a case that the first CSI and the second CSI correspond to different CSI reports respectively, a quantity of CPUs needed for the CSI reports according to configuration parameters of the CSI reports;
determining, by the terminal, in a case that the first CSI and the second CSI correspond to different CSI reference signal CSI-RS resources respectively, a quantity of the first CPUs and a quantity of the second CPUs according to a quantity of the CSI-RS resources corresponding to the first CSI and a quantity of the CSI-RS resources corresponding to the second CSI; and
determining, by the terminal, in a case that the first CSI and the second CSI correspond to same CSI-RS resources, according to a quantity of the CSI-RS resources, a quantity of first CPUs that need to be used.

12. The method according to claim 11, wherein in a case that the first CSI and the second CSI correspond to different CSI-RS resources respectively, a quantity of CPUs used in each CSI report is a first quantity, and the first quantity is a maximum value or a minimum value between the quantity of the first CPUs and the quantity of the second CPUs.

13. The method according to claim 4, wherein the method further comprises at least one of the following:
determining, by the terminal, a priority order of the first CSI according to priorities of the first CSI in a case that the CPUs comprise the first CPUs and the second CPUs;
determining, by the terminal, a priority order of the first CSI and the second CSI according to priorities of the first CSI and priorities of the second CSI in a case that the CPUs comprise the third CPUs; and
determining, by the terminal, a priority order of the first CSI according to priorities of the first CSI in a case that the CPU comprises the third CPUs, wherein priorities of all the first CSI are higher or lower than priorities of the second CSI.

14. The method according to claim 13, wherein in a case that the CPUs comprise the first CPUs and the second CPUs and the terminal determines the priority order of the first CSI according to the priorities of the first CSI, the method further comprises:
selecting, by the terminal, according to a quantity of first CPUs needed for a CSI report of the first CSI and the priorities of the first CSI, high-priority first CSI that satisfies a target condition, and reporting the high-priority first CSI, wherein the target condition is a maximum quantity of first CPUs simultaneously processable by the terminal.

15. The method according to claim 4, wherein the third CPUs are capable of performing calculation of at least one piece of first CSI.

16. The method according to claim 4, wherein in a case that the CPUs comprise the third CPUs and a network side device indicates the terminal to report at least one piece of CSI, the method further comprises:
determining, by the terminal according to a protocol agreement or an indication by the network side device, a quantity of third CPUs needed for each CSI report.

17. The method according to claim 4, wherein in a case that the CPUs comprise the fourth CPUs and the second CPUs, the method further comprises:
reporting, by the terminal, a maximum quantity of the fourth CPUs and a maximum quantity of the second CPUs.

18. The method according to claim 4, wherein in a case that the CPUs comprise the fourth CPUs, the method further comprises at least one of the following:
processing, by the terminal, the first CSI and the second CSI by using the fourth CPUs in a case that the terminal simultaneously reports the first CSI and the second CSI by using one CSI-RS resource; and
processing, by the terminal, in a case that one CSI report comprises the first CSI and the second CSI, the first CSI and the second CSI that correspond to the CSI report by using the fourth CPUs.

19. A method for receiving a quantity of CPUs, comprising:
receiving, by a network side device, a quantity, which is reported by a terminal, of CPUs occupied by first CSI,
wherein the first CSI is CSI processed based on an AI unit.

20. The method according to claim 19, wherein the receiving, by a network side device, a quantity, which is reported by a terminal, of CPUs occupied by first CSI comprises:
receiving, by the network side device, a quantity, which is reported by the terminal, of CPUs occupied by the first CSI under different CSI parameters, wherein the CSI parameters are parameters related to CSI calculation.

21. The method according to claim 19, wherein the method further comprises:
determining, by the network side device, a quantity of CPUs usable for the first CSI of the terminal according to a configured CSI parameter.

22. The method according to any one of claims 19 to 21, wherein the CPUs comprise at least one of the following:
first CPUs and second CPUs, wherein the first CPUs are CPUs used for a CSI report with a PMI calculated based on the AI unit, and the second CPUs comprise CPUs needing no calculation of a PMI and CPUs configured to calculate second CSI;
third CPUs, wherein the third CPUs are configured to perform calculation of the first CSI and calculation of the second CSI, and the third CPUs are capable of performing only the calculation of the first CSI or the calculation of the second CSI at a same time; and
fourth CPUs, wherein the fourth CPUs are configured to perform the calculation of the first CSI and the calculation of the second CSI at a same time,
wherein the second CSI is CSI processed based on a non-AI unit.

23. The method according to claim 22, wherein in a case that the CPUs comprise the first CPUs, the method further comprises:
receiving, by the network side device, a first capability reported by the terminal, wherein the first capability comprises at least one of the following:
a maximum quantity of first CPUs that the terminal supports for simultaneous calculation;
a maximum total quantity of first CPUs and second CPUs that the terminal supports for simultaneous calculation; and
a quantity of first CPUs occupied by each piece of first CSI.

24. The method according to claim 22, wherein in a case that the CPUs comprise the third CPUs, the method further comprises:
receiving, by the network side device, a second capability reported by the terminal, wherein the second capability comprises at least one of the following:
a quantity of third CPUs that the terminal supports for simultaneous calculation; and
a quantity of third CPUs occupied by each piece of first CSI.

25. The method according to claim 22, wherein in a case that the CPUs comprise the first CPUs and a protocol agrees on a quantity of first CPUs needing to be used for a CSI report, the method further comprises:
configuring or indicating, by the network side device, a quantity of first CPUs usable by the terminal.

26. The method according to claim 22, wherein in a case that the CPUs comprise the first CPUs and the second CPUs, the method further comprises:
configuring, by the network side device, the terminal to report the first CSI and the second CSI.

27. The method according to claim 22, wherein in a case that the CPUs comprise the fourth CPUs and the second CPUs, the method further comprises:
receiving, by the network side device, a maximum quantity of fourth CPUs and a maximum quantity of second CPUs that are reported by the terminal.

28. An apparatus for reporting a quantity of CPUs, comprising:
a reporting module, configured to report a quantity of CPUs occupied by first CSI,
wherein the first CSI is CSI processed based on an AI unit.

29. An apparatus for receiving a quantity of CPUs, comprising:
a receiving module, configured to receive a quantity, which is reported by a terminal, of CPUs occupied by first CSI,
wherein the first CSI is CSI processed based on an AI unit.

30. A terminal, comprising a processor and a memory, wherein the memory stores a program or instructions runnable on the processor, and the program or the instructions, when executed by the processor, implement the steps of the method for reporting a quantity of CPUs according to any one of claims 1 to 18.

31. A network side device, comprising a processor and a memory, wherein the memory stores a program or instructions runnable on the processor, and the program or the instructions, when executed by the processor, implement the steps of the method for receiving a quantity of CPUs according to any one of claims 19 to 27.

32. A readable storage medium, wherein the readable storage medium stores a program or instructions, and the program or instructions, when executed by a processor, implement the steps of the method for reporting a quantity of CPUs according to any one of claims 1 to 18, or the steps of the method for receiving a quantity of CPUs according to any one of claims 19 to 27.
